# EUROPEAN PATENT APPLICATION

(11) **EP 4 726 536 A1**
(43) Date of publication of application: **15.04.2026**
(21) Application number: 24858527.5
(22) Date of filing: 26.08.2024
(51) Int. Cl.: G06F 9/30

(54) **TPM COMMUNICATION METHOD, TPM, SINGLE BOARD, AND DEVICE**

(30) Priority: 28.08.2023 CN 202311096737
(71) Applicant: Huawei Technologies Co., Ltd., Shenzhen, Guangdong 518129 (CN)
(72) Inventor: LIAN, Yide, Shenzhen, Guangdong 518129 (CN); LIU, Xiaohu, Shenzhen, Guangdong 518129 (CN); ZHANG, Qinglong, Shenzhen, Guangdong 518129 (CN)
(74) Representative: Körber, Martin Hans
(86) International application number: PCT/CN2024/114575
(87) International publication number: WO 2025/044991

(57) **Abstract**

The present disclosure provides a communication method of a TPM, a TPM, a board, and a device, and is applied to the field of computer technologies. The TPM includes a TPM logic module, a receive buffer, a TPM register, and a processor. The TPM register is a storage space obtained by dividing a memory of the TPM. The TPM logic module receives a TPM register write command sent by a host, and stores a payload of the write command into the receive buffer. The payload of the TPM register write command is a part or all of content forming TPM command data. When data in the receive buffer reaches a first data amount threshold, the processor dumps the data in the receive buffer into the TPM register. When all the content of the TPM command data is stored in the TPM register, the processor executes the TPM command data. This can resolve a problem of high TPM hardware costs due to use of a hardware-only solution for TPM communication in related technologies.

## Description

This application claims priority to Chinese Patent Application No. 202311096737.3, filed on August 28, 2023 and entitled "COMMUNICATION METHOD OF TPM, TPM, BOARD, AND DEVICE", which is incorporated herein by reference in its entirety.

### TECHNICAL FIELD

The present disclosure relates to the field of computer technologies, and in particular, to a communication method of a TPM, a TPM, a board, and a device.

### BACKGROUND

A trusted platform module (TPM, Trusted Platform Module) is a standalone security chip, and can securely store information for verifying a device. The device may be a computer, a mobile phone, a communication device, or the like. The information for verifying the device may be a password, a certificate, an encryption key, or the like. As a passive component, the TPM does not actively perform an operation. A service central processing unit (Central Processing Unit, CPU) of the device needs to communicate with the TPM as a host (host), and deliver TPM command data to the TPM. Then, the TPM executes a task indicated by the TPM command data, and returns response data of the task to the host.

Currently, a module that is in the TPM and that is configured to communicate with the host is implemented by hardware only, increasing overall hardware costs of the TPM.

### SUMMARY

The present disclosure provides a communication method of a TPM, a TPM, a board, and a device, to resolve a problem of high hardware costs of a TPM in related technologies because a module that is in the TPM and that is configured to communicate with a host is implemented by hardware only. Technical solutions are as follows.

According to a first aspect, a communication method of a TPM is provided. The TPM includes a TPM logic module, a receive buffer, a TPM register, and a processor. The TPM register is a storage space obtained by dividing a memory of the TPM. The method includes:

The TPM logic module receives a TPM register write command sent by a host, and stores a payload of the TPM register write command into the receive buffer. The payload of the TPM register write command is a part or all of content forming TPM command data. When data stored in the receive buffer reaches a first data amount threshold, the processor dumps, into the TPM register, the data stored in the receive buffer. When all the content of the TPM command data is stored in the TPM register, the processor executes a task indicated by the TPM command data.

In the technical solutions provided in the present disclosure, the TPM register that needs to store the complete TPM command data is implemented through software simulation (that is, the storage space is obtained through dividing the memory of the TPM, and the storage space is externally represented as the TPM register). It is not required for the newly added receive buffer to be capable of storing the complete TPM command data. The receive buffer needs to be capable of storing only the payload of the TPM register write command. In actual implementation, the payload of the TPM register write command is merely a part of the TPM command data. In this way, although the receive buffer is implemented by hardware, a required chip area is smaller than a chip area required by a TPM register implemented by hardware in related technologies, to effectively reduce hardware costs. For example, the TPM register needs to be capable of storing data of at least 1k bytes (bytes), and the receive buffer needs to be capable of storing only data of 128 bytes. In hardware implementation, hardware costs required for implementing the receive buffer are much lower than hardware costs required for implementing the TPM register.

In a possible implementation, the TPM further includes a transmit buffer, and the method further includes:

The processor stores response data of the task into the TPM register, and dumps, into the transmit buffer, the response data stored in the TPM register. The TPM logic module sends, to the host, the response data stored in the transmit buffer.

In the technical solution provided in the present disclosure, the transmit buffer is further introduced into the TPM, and an amount of data that needs to be stored by the transmit buffer is close to an amount of data that needs to be stored by the receive buffer. For example, both the transmit buffer and the receive buffer may be capable of storing only 128-byte data. In this way, a total amount of data that the transmit buffer and the receive buffer need to be capable of storing is much less than an amount of data that the TPM register needs to be capable of storing. In other words, hardware costs are much lower.

In a possible implementation, the processor storing the response data of the task into the TPM register may include:

The processor reads, from the response data stored in the TPM register, data that is not greater than a remaining storage space of the transmit buffer, and dumps the data into the transmit buffer. The TPM logic module receives a TPM register read command sent by the host. The TPM register read command carries indication information indicating an amount of to-be-read data. Then, the TPM logic module sends, to the host, response data that is of the amount of the to-be-read data and that is stored in the transmit buffer. In addition, the TPM logic module monitors an amount of data stored in the transmit buffer, and sends a first interrupt signal to the processor when the amount of the stored data is less than a second data amount threshold. In response to the first interrupt signal, the processor reads, from the response data stored in the TPM register, data that is not greater than the remaining storage space of the transmit buffer, and dumps the data into the transmit buffer.

In the technical solutions provided in the present disclosure, a command header of the TPM register read command includes a read data amount field, and a value of the field is indication information of an amount of to-be-read data and indicates an amount of data that the host wants to read. A storage space of the transmit buffer is relatively small, and may be unable to store complete response data. In this case, the processor may dump the response data into the transmit buffer in batches.

In a possible implementation, before the TPM logic module receives the TPM register write command sent by the host, the method further includes:

The TPM logic module configures a value of a burst count (burst count) field in a status register as a size of a remaining storage space of the receive buffer.

In the solutions provided in the present disclosure, the TPM logic module may dynamically adjust the value of the burst count field in the status register. The value of the burst count field is provided for the host. In a scenario in which the TPM receives command data, the value of this field indicates how much data the TPM can receive without back pressure on the host. In order that data sent by the host can be just received by the TPM without back pressure on the host, the TPM logic module may configure the value of the field as the size of the remaining storage space of the receive buffer in a scenario in which the TPM receives command data. In this way, a data amount of the payload carried in the TPM register write command sent by the host to the TPM may be less than or equal to the size of the remaining storage space of the receive buffer. Therefore, the TPM logic module may return a high-level signal when receiving the command header of the TPM register write command (a current beat). In this way, the host may send the payload of the TPM register write command to the TPM without waiting. In this way, the communication method of the TPM provided in the present disclosure can meet a zero latency requirement of a TCG PC client platform TPM profile (TCG PC Client Platform TPM Profile, PTP) specification.

In a possible implementation, after the processor executes the task indicated by the TPM command data, the method further includes:

The TPM logic module configures the value of the burst count field in the status register as a data amount of the data stored in the transmit buffer.

In the solutions provided in the present disclosure, in a scenario in which the TPM sends data (that is, a scenario in which the host reads the response data of the task from the TPM), the value of the burst count field indicates how much data that can be sent by the TPM to the host without back pressure on the host. In order that the amount of the data stored in the transmit buffer is not less than the amount of the data that the host wants to read, in a scenario in which the TPM sends data, the TPM logic module configures the value of the burst count field as the amount of the data stored in the transmit buffer. In this way, the host can read, without waiting, the response data that the host wants to read.

In a possible implementation, that the processor dumps, into the TPM register, the data stored in the receive buffer may be triggered by the TPM logic module. Processing is as follows:

The TPM logic module determines that the data stored in the receive buffer reaches the first data amount threshold, and sends a second interrupt message to the processor. In response to the second interrupt message, the processor dumps, into the TPM register, the data stored in the receive buffer.

According to a second aspect, a TPM is provided. The TPM includes a TPM logic module, a receive buffer, a TPM register, and a processor. The TPM register is a storage space obtained by dividing a memory of the TPM.

The TPM logic module is configured to: receive a TPM register write command sent by a host (host), and store a payload of the TPM register write command into the receive buffer. The payload of the TPM register write command is a part or all of content forming TPM command data.

When data stored in the receive buffer reaches a first data amount threshold, the processor is configured to dump, into the TPM register, the data stored in the receive buffer.

When all the content of the TPM command data is stored in the TPM register, the processor is further configured to execute a task indicated by the TPM command data.

In a possible implementation, the TPM further includes a transmit buffer, and the processor is further configured to: store response data of the task into the TPM register, and dump, into the transmit buffer, the response data stored in the TPM register.

The TPM logic module is further configured to send, to the host, the response data stored in the transmit buffer.

In a possible implementation, the processor is configured to: read, from the response data stored in the TPM register, data that is not greater than a remaining storage space of the transmit buffer, and dump the data into the transmit buffer.

The TPM logic module is configured to: receive, by the TPM logic module, a TPM register read command sent by the host, where the TPM register read command carries indication information indicating an amount of to-be-read data; and
send, to the host, response data that is of the amount of the to-be-read data and that is stored in the transmit buffer.

The TPM logic module is further configured to: determine that data stored in the transmit buffer is less than a second data amount threshold, and send a first interrupt signal to the processor.

In response to the first interrupt signal, the processor is further configured to: read, from the response data stored in the TPM register, data that is not greater than the remaining storage space of the transmit buffer, and dump the data into the transmit buffer.

In a possible implementation, before the TPM logic module receives the TPM register write command sent by the host, the TPM logic module is further configured to configure a value of a burst count burst count field in a status register as a size of a remaining storage space of the receive buffer.

In a possible implementation, after the processor executes the task indicated by the TPM command data, the TPM logic module is further configured to configure the value of the burst count field in the status register as a data amount of the data stored in the transmit buffer.

In a possible implementation, the TPM logic module is further configured to: determine that the data stored in the receive buffer reaches the first data amount threshold, and send a second interrupt message to the processor.

In response to the second interrupt message, the processor is configured to dump, into the TPM register, the data stored in the receive buffer.

According to a third aspect, a board is provided. The board includes a processor and a trusted platform module TPM. The processor is configured to send a register read/write command to the TPM. The TPM is configured to perform the communication method of the TPM according to the first aspect.

According to a fourth aspect, a device is provided. The device includes a CPU and a TPM. The CPU is configured to send a TPM register write command to the TPM. The TPM is configured to perform the communication method of the TPM according to the first aspect.

### BRIEF DESCRIPTION OF DRAWINGS

FIG. 1 is a diagram of a structure of a board according to an embodiment of the present disclosure;
FIG. 2 is a diagram of a structure of a TPM according to an embodiment of the present disclosure;
FIG. 3 is a diagram of a structure of a TPM according to an embodiment of the present disclosure;
FIG. 4 is a diagram of a structure of a TPM according to an embodiment of the present disclosure;
FIG. 5A and FIG. 5B are a flowchart of a communication method of a TPM according to an embodiment of the present disclosure; and
FIG. 6 is a diagram of a structure of a device according to an embodiment of the present disclosure.

### DESCRIPTION OF EMBODIMENTS

To make the objectives, technical solutions, and advantages of the present disclosure clearer, the following further describes the implementations of the present disclosure in detail with reference to the accompanying drawings.

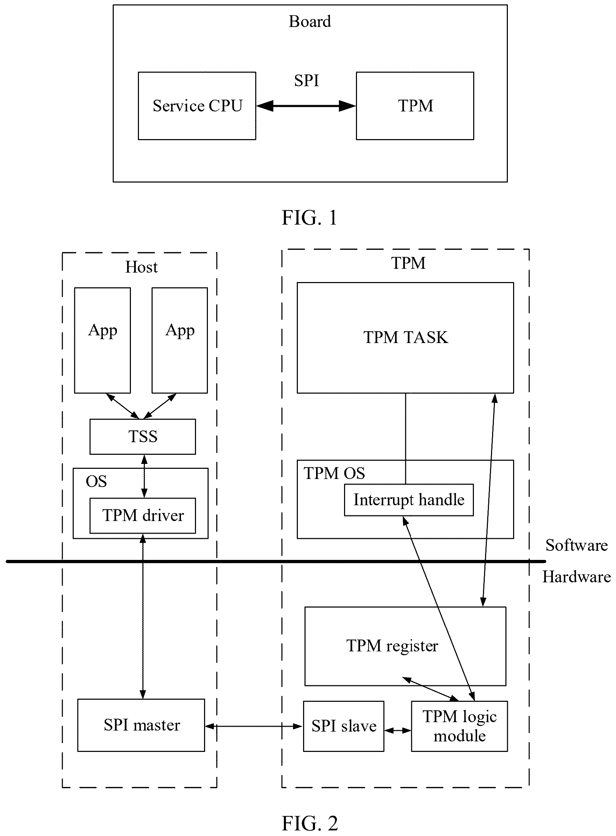

An embodiment of the present disclosure provides a communication method of a TPM. The method may be applied to the TPM. The TPM may be an independent chip, and is deployed in a device. The device may be a computer, a mobile phone, a communication device, or the like. FIG. 1 shows a board of a device. A service CPU and a TPM are deployed on the board. The service CPU serves as a host, and communicates with the TPM through a serial peripheral interface (Serial Peripheral Interface, SPI).

Communication between the host and the TPM generally includes two processes. One process is that the host delivers TPM command data to the TPM through the SPI, and the TPM writes the received TPM command data into a TPM register (TPM register) and executes a task indicated by the TPM command data. The other process is that the TPM executes the task indicated by the TPM command data, generates response data of the task, writes the response data of the task into the TPM register, and returns the response data to the host through the SPI.

In a related technology, there are generally the following two solutions for implementing the foregoing communication processes.

### Related technology 1: hardware-only implementation

With reference to FIG. 2, in a solution of the hardware-only implementation, both a TPM register (TPM register) and a TPM logic module (TPM Logic Module) are hardware modules. The following briefly describes a TPM communication procedure in the solution of the hardware-only implementation.

Step 21: An application (Application, app) of a host invokes a trusted software stack (Trusted Software Stack, TSS), invokes a TPM driver in an operating system (Operating System, OS) by using the TSS, generates TPM command data in the TSS by using the TPM driver, and delivers the TPM command data to an SPI master (SPI master).

Step 22: The SPI master adds the TPM command data to at least one TPM register write command based on a size of the TPM command data, and sequentially sends the at least one TPM register write command to an SPI slave (SPI slave) in the TPM.

Step 23: The SPI slave receives the TPM register write command, and forwards the TPM register write command to the TPM logic module.

Step 24: The TPM logic module parses the TPM register write command, and writes a payload of the TPM register write command into the TPM register. The TPM register, as a data buffer (data FIFO), is configured to store TPM command data and task response data.

Step 25: When determining that all content of the TPM command data is written to the TPM register, the TPM logic module reports an interrupt to an interrupt handle (Interrupt handle) module.

Step 26: The interrupt handle module wakes up a TPM task (TASK) module to execute a task indicated by the TPM command data.

Step 27: After completing execution of the task, the TPM task module writes the response data of the task into the TPM register, and notifies the TPM logic module that the task processing is completed.

Step 28: The host sends a TPM register read command to the TPM, to read the response data of the task. The TPM logic module sends the task response data to the host through the SPI slave.

In the related technology 1, the TPM register is implemented by hardware. Generally, the TPM register needs to be capable of storing data of at least 1k bytes (Bytes). If the TPM needs to support an asymmetric encryption algorithm (RSA) 4096, the TPM register needs to be capable of storing 4k-byte data. In this way, an area of the TPM register implemented by hardware in a chip is relatively large, resulting in relatively high hardware costs.

### Related technology 2: software-only implementation

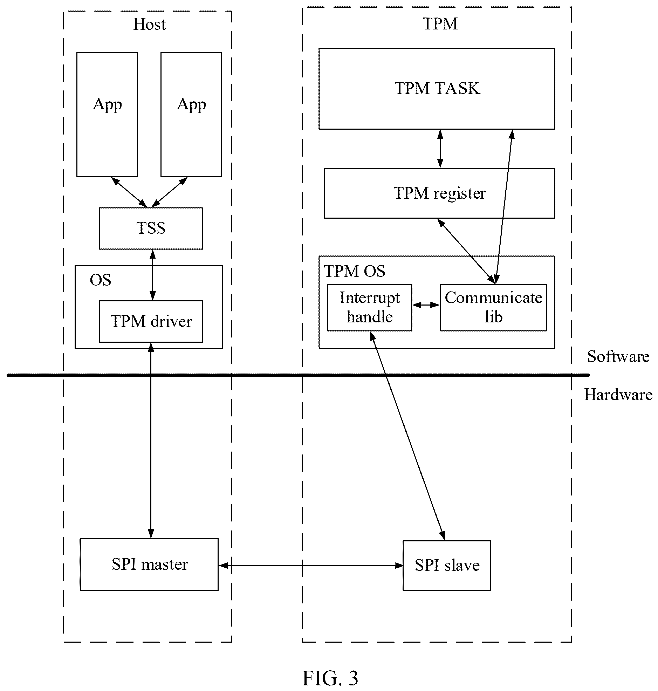

With reference to FIG. 3, in a solution of the software-only implementation, a communication library module (Communicate Lib) is a software module, and a TPM register is implemented through software simulation. The communicate lib replaces the TPM logic module in the hardware-only implementation to implement the related functions of the TPM logic module. The TPM register is implemented through software simulation. A storage space is obtained through division from a memory of a TPM, and serves as the TPM register. The storage space is the TPM register for a host. Both TPM command data delivered by the host and task response data are stored in the storage space. A random access memory may be a random (Random Access Memory, RAM). The following briefly describes a TPM communication procedure in the software-only implementation.

Step 31: An app of the host invokes a TSS, invokes a TPM driver in an OS by using the TSS, generates TPM command data in the TSS by using the TPM driver, and delivers the TPM command data to an SPI master.

Step 32: The SPI master adds the TPM command data to at least one TPM register write command based on a size of the TPM command data, and sequentially sends the at least one TPM register write command to an SPI slave in the TPM.

Step 33: The SPI slave receives the TPM register write command, and reports an interrupt to an interrupt handle module.

Step 34: The interrupt handle module notifies the communicate lib, and the communicate lib writes a payload of the TPM register write command into the TPM register.

Step 35: When determining that all content of the TPM command data is written into the TPM register, the communicate lib wakes up a TPM task module to execute a task indicated by the TPM command data.

Step 36: After completing the task, the TPM task module writes the response data of the task into the TPM register, and notifies the communicate lib that the task processing is completed.

Step 37: The host sends a TPM register read command to the TPM, to read the response data of the task. The communicate lib sends the response data of the task to the host through the SPI slave.

In the related technology 2, communication between the TPM and the host does not meet a zero latency requirement of a TCG PC client platform TPM profile (TCG PC Client Platform TPM Profile, PTP) specification. It is specified in the PTP specification that, when the host sends a final byte of a command header of the register read/write command to the TPM, the host needs to be capable of reading data returned by the TPM. However, for the related technology 2, the command header needs to be first sent by the SPI slave to the communicate lib. After receiving the complete command header, the communicate lib further needs to parse the command header, and returns corresponding data to the host only after the parsing is completed. Therefore, the related technology 2 cannot meet the zero latency requirement of the PTP specification.

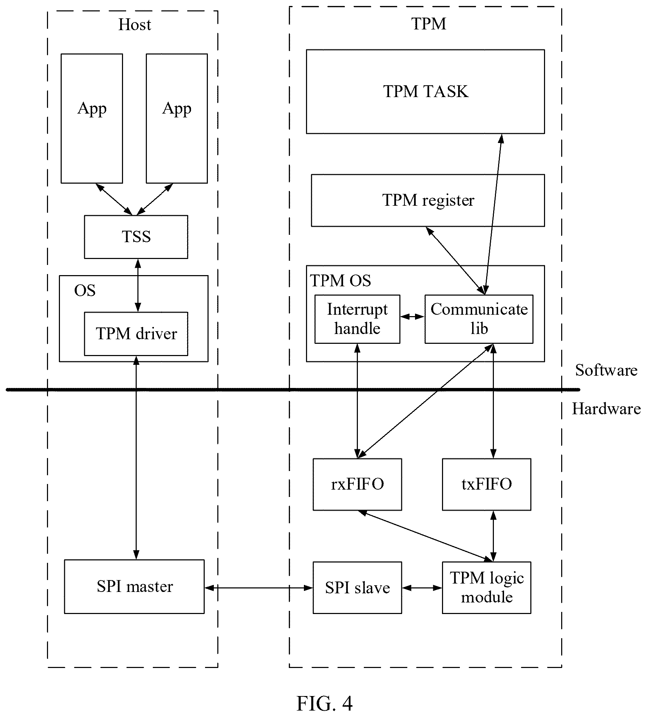

The present disclosure provides a communication method of a TPM. With reference to FIG. 4, the TPM includes an SPI slave, a TPM logic module, a TPM register, a receive buffer (rxFIFO), and a transmit buffer (txFIFO). The TPM logic module, rxFIFO, and txFIFO are hardware modules, and the TPM register is implemented through software simulation. In addition, the TPM may further include software modules: a TPM task module, an interrupt handle module, and a communicate lib module. The interrupt handle module and the communicate lib module may be configured in an OS of the TPM. These software modules are run by a processor of the TPM. Certainly, the software modules mentioned herein are merely examples of division performed based on execution functions. These modules may be divided into more software modules, or may be divided into fewer software modules. Specific division of the software modules is not limited in embodiments of the present disclosure.

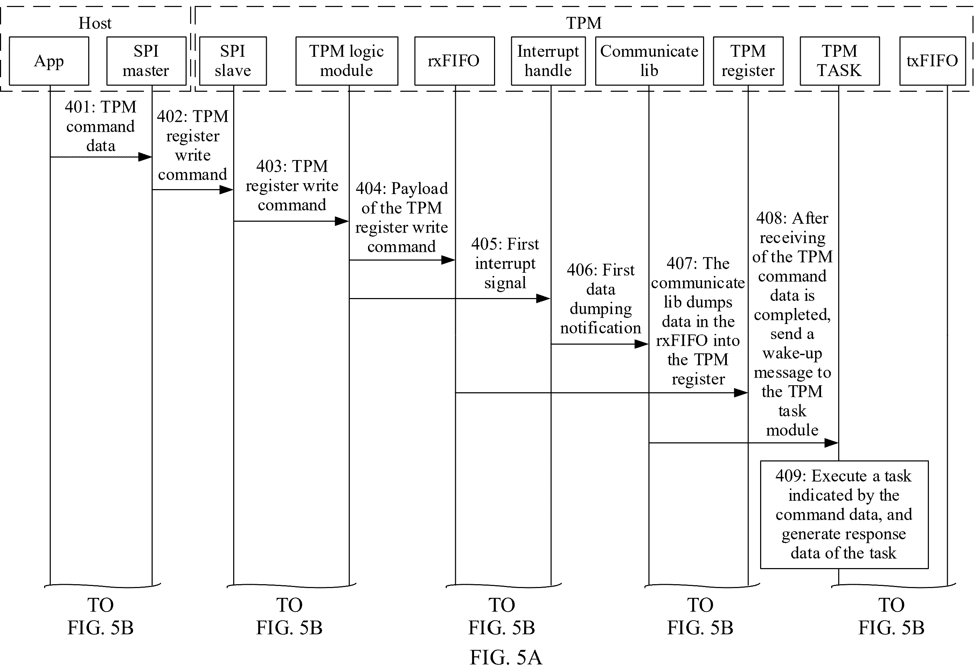

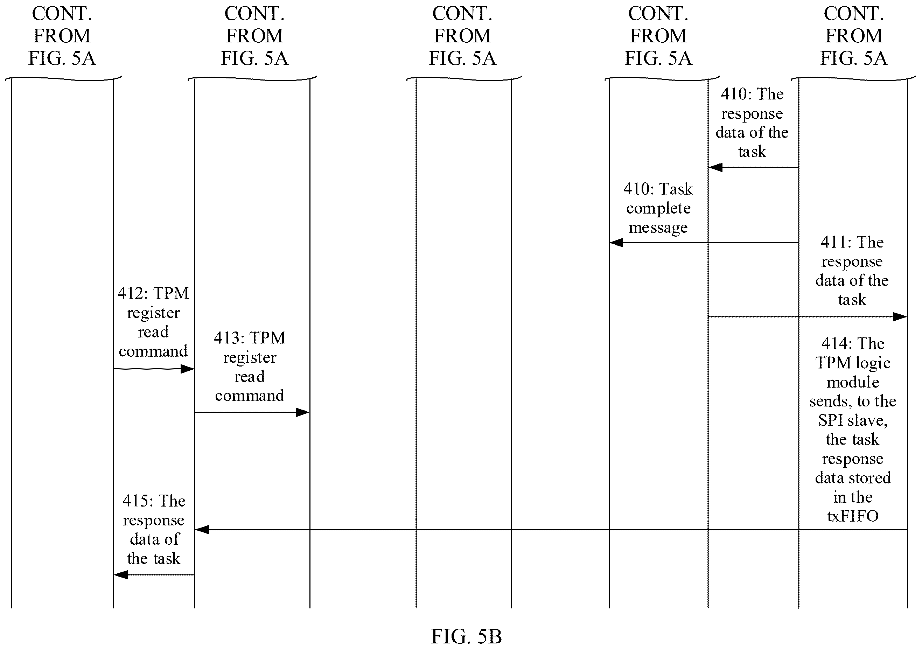

With reference to the TPM shown in FIG. 4, the following describes the communication method of the TPM provided in embodiments of the present disclosure. With reference to FIG. 5A and FIG. 5B, the communication method provided in embodiments of the present disclosure may include the following processing procedure.

Step 401: An application run by a host delivers TPM command data to an SPI master.

In implementation, when the application run by the host needs to indicate a TPM to execute a task, the application may invoke a TSS, invoke a TPM driver by using the TSS, and generate the corresponding TPM command data in the TSS by using the TPM driver. The TPM command data indicates the TPM to execute the corresponding task. For example, when the TPM needs to be initialized, the TPM command data generated by the host is initialization (start up) command data, and the initialization command data indicates the TPM to execute an initialization task.

After the TPM command data is generated, the TPM command data is delivered to the SPI master by using the TPM driver.

Step 402: The SPI master sends a TPM register write command to the SPI slave (SPI slave).

In implementation, the host communicates with the TPM by using an SPI, and an SPI protocol that complies with a PTP specification specifies a maximum data amount of a payload in single transmission. In addition, there is a burst count (burst count) field in a status register (Status Register) of the TPM. In a scenario in which the TPM receives the TPM command data, the field indicates how much data that can be received by the TPM without back pressure on the host. In a scenario in which the TPM sends response data of the task, the field indicates how much data that can be sent by the TPM to the host without back pressure on the host.

Therefore, the SPI master needs to obtain a value of the burst count field in the status register. Then, whether the TPM command data needs to be segmented is determined based on the value of the burst count field and the maximum data amount that is of the payload in single transmission and that is specified by the SPI.

If a data amount of the TPM command data is greater than the maximum data amount that is of the payload in single transmission and that is specified by the SPI, or a data amount of the TPM command data is greater than the value of the burst count field, a data segment is obtained through segmentation from the beginning byte of the TPM command data, and an SPI command header is encapsulated into the data segment to obtain the TPM register write command. The TPM register write command indicates the TPM to write the payload into a specified register. When the data segment is obtained through segmentation, a size of the data segment obtained through segmentation may be MIN(a data amount of unsent TPM command data, the maximum data amount that is of the payload in single transmission and that is specified by the SPI, and the value of the burst count field that indicates a data amount), where MIN() indicates to take a minimum value among elements in the brackets. For example, the data amount of the unsent TPM command data is 128 bytes, the maximum data amount that is of the payload in single transmission and that is specified by the SPI is 64 bytes, and the value of the burst count field is 128. In this case, the data segment obtained through segmentation may be 64 bytes.

If the data amount of the TPM command data is less than or equal to the maximum data amount that is of the payload in single transmission and that is specified by the SPI, and the data amount of the TPM command data is less than or equal to the value of the burst count field, an SPI command header is encapsulated into the TPM command data to obtain the TPM register write command.

After the TPM register write command is generated, the SPI master sends the TPM register write command to the SPI slave. When the SPI master sends the TPM register write command to the SPI slave, if a low-level signal returned by the TPM is received at a current beat of completing sending the command header of the TPM register write command, it indicates that the TPM is not ready to receive the TPM register write command, and the SPI master does not send a payload in the TPM register write command for now. If a high-level signal returned by the TPM is received, it indicates that the TPM is ready to receive the TPM register write command, and the SPI master continues to send a payload in the TPM register write command.

In addition, if the payload in the TPM register write command is a data segment of the TPM command data, after sending of the current TPM register write command is completed, the SPI master continues to perform segmentation and encapsulation on unsent TPM command data according to the foregoing segmentation rule to generate a corresponding TPM register write command, and sends the corresponding TPM register write command to the TPM.

Step 403: The SPI slave sends the TPM register write command to the TPM logic module.

In implementation, each time the SPI slave receives data sent by the SPI master, the SPI slave immediately forwards the received data to the TPM logic module.

Step 404: The TPM logic module stores the payload of the TPM register write command into the rxFIFO.

In implementation, the TPM logic module detects whether a remaining storage space of the rxFIFO is sufficient for storing the payload of the TPM register write command, and if the remaining storage space of the rxFIFO is sufficient for storing the payload of the TPM register write command, stores the payload of the TPM register write command into the rxFIFO. If the remaining storage space of the rxFIFO is insufficient for storing the payload of the TPM register write command, back pressure is performed on the host.

Specifically, after receiving the command header of the TPM register write command sent by the SPI slave, the TPM logic module parses the command header; determines, based on a read/write identifier field in the command header, that a TPM register command that is currently being received is the TPM register write command; and determines, based on a read/write data amount field in the command header, an amount of to-be-written data (that is, a data amount of the payload of the TPM register write command). Then, the TPM logic module determines whether the amount of the to-be-written data is less than or equal to the size of the remaining storage space of the rxFIFO.

If it is determined that the amount of the to-be-written data is less than or equal to the size of the remaining storage space of the rxFIFO, a high-level signal is returned to the SPI master by using the SPI slave, to indicate the SPI master to send the payload of the TPM register write command. When receiving the high-level signal, the SPI master sends the payload of the TPM register write command to the SPI slave. The SPI slave sends the received payload of the TPM register write command to the TPM logic module. The TPM logic module stores the payload of the TPM register write command into the rxFIFO.

If it is determined that the amount of the to-be-written data is greater than the size of the remaining storage space of the rxFIFO, back pressure is performed on the host. The back pressure processing on the host may be returning a low-level signal to the SPI master by using the SPI slave. When receiving the low-level signal, the SPI master does not send the payload of the TPM register write command to the SPI slave for now. When detecting that the size of the remaining storage space of the rxFIFO is greater than or equal to the amount of the to-be-written data, the TPM logic module stops back pressure on the host and returns a high-level signal to the SPI master by using the SPI slave, to indicate the SPI master to send the payload of the TPM register write command. When receiving the high-level signal, the SPI master sends the payload of the TPM register write command to the SPI slave. The SPI slave sends the received payload of the TPM register write command to the TPM logic module. The TPM logic module stores the payload of the TPM register write command into the rxFIFO.

In a possible implementation, in order that the payload of the TPM register write command sent by the host can be stored in the rxFIFO without back pressure, in embodiments of the present disclosure, the TPM logic module may further configure the value of the burst count field in the status register based on a current mode (a data receiving mode or a data sending mode) of the TPM. The following first describes the value of the burst count field configured by the TPM logic module in the data receiving mode.

Before delivering command data to the TPM, the host first notifies the TPM. Correspondingly, after the TPM obtains the notification, the communicate lib configures the TPM logic module to be in the data receiving mode. Then, the TPM logic module detects the remaining storage space of the rxFIFO, and configures the value of the burst count field in the status register as a value that can indicate the size of the remaining storage space of the rxFIFO. For example, if the size of the remaining storage space of the rxFIFO is 128 bytes, the value of the burst count field may be set to 128.

Step 405: When a data amount of data in the rxFIFO reaches a first data amount threshold, the TPM logic module reports a first interrupt signal to the interrupt handle module.

In implementation, each time after the TPM logic module stores the payload of the TPM register write command in the rxFIFO, the TPM logic module detects the data amount of the data stored in the rxFIFO, and if the data amount of the data stored in the rxFIFO is greater than the first data amount threshold, sends the first interrupt signal to the interrupt handle module.

The first data amount threshold may be dynamically configured by the communicate lib. The following describes configuration of the first data amount threshold.

Before delivering the command data to the TPM, the host first notifies the TPM. Correspondingly, after the TPM obtains the notification, the communicate lib may initialize and configure the first data amount threshold as a command header length of the TPM command data, for example, 10 bytes. After a command header of the TPM command data is received and the command header of the TPM command data is dumped into the TPM register, the communicate lib determines a total data amount of the TPM command data based on the command header, and calculates a remaining data amount of the TPM command data that is currently not received by the TPM. Further, the first data amount threshold is configured as MIN(the remaining data amount of the TPM command data, a default threshold). The default threshold may be preconfigured based on an actual storage space of the rxFIFO. For example, the default threshold may be a half of a total storage space of the rxFIFO. For example, when the total storage space of the rxFIFO is 128 bytes, the default threshold may be configured as 64 bytes.

Step 406: The interrupt handle module sends a first data dumping notification to the communicate lib.

In implementation, after receiving the first interrupt signal, the interrupt handle module sends the first data dumping notification to the communicate lib by using an interrupt processing function. The first data dumping notification indicates the communicate lib to dump the data stored in the rxFIFO into the TPM register.

Step 407: The communicate lib dumps the data in the rxFIFO into the TPM register.

In implementation, after receiving the first data dumping notification, the communicate lib dumps the data stored in the rxFIFO into the TPM register.

Step 408: After determining that receiving of the TPM command data is completed, the communicate lib sends a wake-up message to the TPM task module.

In implementation, the command header of the TPM command data includes a data amount indication field. The communicate lib may read the value of the data amount indication field, and detect whether a data amount of the TPM command data stored in the TPM register reaches a data amount indicated by the data amount indication field. If the data amount of the TPM command data stored in the TPM register reaches the data amount indicated by the data amount indication field, it is determined that receiving of the TPM command data is completed, and the wake-up message is sent to the TPM task module.

Step 409: The TPM task module executes a task indicated by the command data, and generates response data of the task.

In implementation, after receiving the wake-up message, the TPM task module obtains the TPM command data stored in the TPM register, parses the TPM command data, executes the task indicated by the TPM command data, and generates the response data of the task after the task is executed. For example, if the TPM command data is initialization command data, the TPM task module executes an initialization task. Correspondingly, the response data of the task is initialization result data.

Step 410: The TPM task module stores the response data of the task into the TPM register, and returns a task complete message to the communicate lib.

In implementation, after completing execution of the task indicated by the TPM command data, the TPM task module generates the response data of the task. Then, the TPM task module stores the response data of the task into the TPM register, and returns the task complete message to the communicate lib.

Step 411: The communicate lib dumps the response data of the task into the txFIFO.

In implementation, after receiving the task complete message, the communicate lib dumps the response data of the task into the txFIFO. Because a data amount of the response data may be greater than a size of a storage space of the txFIFO, the communicate lib may dump the response data to the txFIFO in a plurality of times.

If the response data of the task is dumped only once, after the dumping is completed, the value of the burst count field in the status register is set to a data amount of data that is currently stored in the txFIFO, and a value of an available data (dataAvail) field in the status register is set to 1. After all task data is read by the host, the dataAvail field in the status register is set to 0. The value of the dataAvail field indicates that the host may read the response data of the task from the TPM.

If the response data of the task is dumped in a plurality of times, after a first time of dumping is completed, the value of the burst count field in the status register is set to a data amount of data that is currently stored in the txFIFO, and an available data (dataAvail) field in the status register is set to 1. After all task data is read by the host, a value of the dataAvail field in the status register is set to 0.

Step 412: The SPI master sends a TPM register read command to the SPI slave.

In implementation, if the host detects that the value of the dataAvail field in the status register of the TPM is 1, the host generates the register read command, and sends the TPM register read command to the SPI slave by using the SPI master. A data amount that is of to-be-read data and that is indicated by a read data amount field in the command header of the register read command is a data amount indicated by the value of the burst count field.

Step 413: The SPI slave sends the TPM register read command to the TPM logic module.

In implementation, after receiving the TPM register read command, the SPI slave sends the TPM register read command to the TPM logic module.

Step 414: The TPM logic module sends, to the SPI slave, the task response data stored in the txFIFO.

In implementation, when the host reads the response data of the task, an amount of data that the host wants to read is exactly an amount of data stored in the txFIFO. To implement this, in embodiments of the present disclosure, the TPM logic module may configure the value of the burst count field in the status register. Specifically, after execution of the task is completed, the communicate lib configures the TPM logic module to be in the data sending mode; and then the TPM logic module detects the data amount of the data stored in the txFIFO, and configures the value of the burst count field in the status register as a value indicating the data amount of the data stored in the txFIFO. For example, if the data amount of the data stored in the txFIFO is 64 bytes, the value of the burst count field may be set to 64.

Based on the foregoing configuration, the TPM logic module reads the read data amount field in the command header of the TPM register read command, and determines that the data amount of the to-be-read data is the same as the data amount of the data stored in the txFIFO. In this case, back pressure does not need to be performed on the host, and the data stored in the txFIFO is directly returned to the SPI slave.

In addition, after each read operation on the txFIFO is completed, the TPM logic module detects the data amount of the data stored in the txFIFI, and sends a second interrupt signal to the interrupt handle module when determining that the data amount of the data stored in the txFIFO is less than a second data amount threshold. After receiving the second interrupt signal, the interrupt handle module sends a data supplement notification to the communicate lib by using an interrupt processing function. After receiving the data supplement notification, the communicate lib reads a part or all of data that has not been dumped in the task response data and that is stored in the TPM register, and dumps the data into the txFIFO. An amount of the specific read and dumped data may be MIN(an amount of remaining data that has not been dumped in the response data, the size of the remaining storage space of the txFIFO).

The second data amount threshold may be dynamically configured by the communicate lib. The following describes configuration of the second data amount threshold.

If the response data of the task needs to be dumped only once, after the dumping is completed or when the dumping is performed, the second data amount threshold is configured to be less than or equal to a value of a total data amount of the response data. For example, the second data amount threshold may be configured as 0.

If task result data needs to be dumped in a plurality of times, after a first time of dumping is completed or when a first time of dumping is performed, the second data amount threshold is configured as a default threshold. For example, the default threshold may be a half of a total storage space of the txFIFO. For example, when the total storage space of the txFIFO is 128 bytes, the default threshold may be configured as 64 bytes. After a final time of dumping is completed or when a final time of dumping is performed, the second data amount threshold is configured to be less than or equal to a value of a data amount of data that is dumped this time. For example, the second data amount threshold may be configured as 0.

Step 415: The SPI slave sends the response data of the task to the SPI master.

In the solutions provided in embodiments of the present disclosure, the TPM register that needs to store complete TPM command data is implemented through software simulation, and does not need to be implemented by using extra hardware; and the newly introduced rxFIFO does not need to be capable of storing complete TPM command data, and only needs to be capable of storing a payload of a TPM register write command. In actual implementation, the payload of the TPM register write command is merely a part of the TPM command data. In this way, although the rxFIFO is implemented by hardware, a required chip area is smaller than a chip area required by the TPM register in related technologies, to effectively reduce hardware costs. In addition, in the solutions provided in embodiments of the present disclosure, the TPM logic module is implemented by hardware. By cooperating with the rxFIFO, the TPM logic module may return data (that is, the high-level signal in embodiments) at a current beat of receiving the command header of the TPM register write command, so that the host can continue to send the payload of the TPM register write command without waiting, thereby meeting a zero latency requirement of the PTP specification.

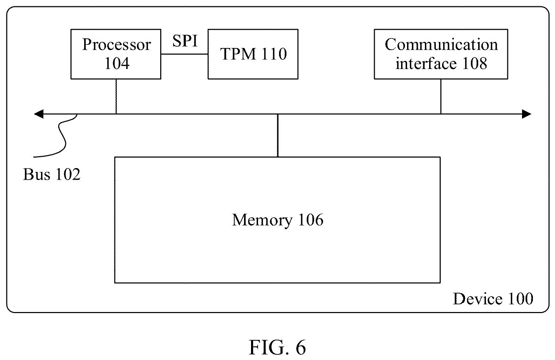

The present disclosure further provides a device 100. As shown in FIG. 6, the device 100 includes a bus 102, a processor 104, a memory 106, a communication interface 108, and a TPM 110. The processor 104, the memory 106, and the communication interface 108 communicate with each other through the bus 102. The computing device 100 may be a server or a terminal device. It should be understood that a quantity of processors and a quantity of memories in the device 100 are not limited in the present disclosure.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 6. However, it does not mean that there is only one bus or only one type of bus. The bus 102 may include a path for transmitting information between the components (for example, the memory 106, the processor 104, and the communication interface 108) of the device 100.

The processor 104 may include any one or more of the following processors: a central processing unit (central processing unit, CPU), a graphics processing unit (graphics processing unit, GPU), a microprocessor (microprocessor, MP), a digital signal processor (digital signal processor, DSP), or the like. The processor 104 may be used as the host in the foregoing embodiment.

The memory 106 may include a volatile memory (volatile memory), for example, a random access memory (random access memory, RAM). The memory 106 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable code, and the processor 104 executes the executable code to separately implement related functions.

The communication interface 108 implements communication between the device 100 and another device or a communication network through a transceiver module, for example, but not limited to, a network interface card or a transceiver.

The TPM 110 may be the TPM mentioned in the foregoing embodiment, and the TPM 110 communicates with the processor 104 by using an SPI.

Finally, it should be noted that the foregoing embodiments are merely intended to describe the technical solutions of this application other than limiting this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the protection scope of the technical solutions of embodiments of this application.

## Claims

1. A communication method of a trusted platform module TPM, wherein the TPM comprises a TPM logic module, a receive buffer, a TPM register, and a processor, the TPM register is a storage space obtained by dividing a memory of the TPM, and the method comprises:
receiving, by the TPM logic module, a TPM register write command sent by a host host, and storing a payload of the TPM register write command into the receive buffer, wherein the payload of the TPM register write command is a part or all of content forming TPM command data;
when data stored in the receive buffer reaches a first data amount threshold, dumping, into the TPM register by the processor, the data stored in the receive buffer; and
when all the content of the TPM command data is stored in the TPM register, executing, by the processor, a task indicated by the TPM command data.

2. The method according to claim 1, wherein the TPM further comprises a transmit buffer, and the method further comprises:
storing, by the processor, response data of the task into the TPM register;
dumping, into the transmit buffer by the processor, the response data stored in the TPM register; and
sending, to the host by the TPM logic module, the response data stored in the transmit buffer.

3. The method according to claim 2, wherein storing, by the processor, the response data of the task into the TPM register comprises:
reading, by the processor from the response data stored in the TPM register, data that is not greater than a remaining storage space of the transmit buffer, and dumping the data into the transmit buffer;
sending, to the host by the TPM logic module, the response data stored in the transmit buffer comprises:
receiving, by the TPM logic module, a TPM register read command sent by the host, wherein the TPM register read command carries indication information indicating an amount of to-be-read data; and
sending, to the host by the TPM logic module, response data that is of the amount of the to-be-read data and that is stored in the transmit buffer; and
the method further comprises:
determining, by the TPM logic module, that data stored in the transmit buffer is less than a second data amount threshold, and sending a first interrupt signal to the processor; and
in response to the first interrupt signal, reading, by the processor from remaining data of the response data stored in the TPM register, data that is not greater than the remaining storage space of the transmit buffer, and dumping the data into the transmit buffer.

4. The method according to any one of claims 1 to 3, wherein before receiving, by the TPM logic module, the TPM register write command sent by the host, the method further comprises:
configuring, by the TPM logic module, a value of a burst count burst count field in a status register as a size of a remaining storage space of the receive buffer.

5. The method according to any one of claims 1 to 4, wherein after executing, by the processor, the task indicated by the TPM command data, the method further comprises:
configuring, by the TPM logic module, the value of the burst count field in the status register as a data amount of the data stored in the transmit buffer.

6. The method according to any one of claims 1 to 5, wherein when the data stored in the receive buffer reaches the first data amount threshold, dumping, into the TPM register by the processor, the data stored in the receive buffer comprises:
determining, by the TPM logic module, that the data stored in the receive buffer reaches the first data amount threshold, and sending a second interrupt message to the processor; and
in response to the second interrupt message, dumping, into the TPM register by the processor, the data stored in the receive buffer.

7. A trusted platform module TPM, wherein the TPM comprises a TPM logic module, a receive buffer, a TPM register, and a processor, and the TPM register is a storage space obtained by dividing a memory of the TPM, wherein
the TPM logic module is configured to: receive a TPM register write command sent by a host host, and store a payload of the TPM register write command into the receive buffer, wherein the payload of the TPM register write command is a part or all of content forming TPM command data;
when data stored in the receive buffer reaches a first data amount threshold, the processor is configured to dump, into the TPM register, the data stored in the receive buffer; and
when all the content of the TPM command data is stored in the TPM register, the processor is further configured to execute a task indicated by the TPM command data.

8. The TPM according to claim 7, wherein the TPM further comprises a transmit buffer, and the processor is further configured to: store response data of the task into the TPM register, and dump, into the transmit buffer, the response data stored in the TPM register; and
the TPM logic module is further configured to send, to the host, the response data stored in the transmit buffer.

9. The TPM according to claim 8, wherein the processor is configured to: read, from the response data stored in the TPM register, data that is not greater than a remaining storage space of the transmit buffer, and dump the data into the transmit buffer;
the TPM logic module is configured to: receive, by the TPM logic module, a TPM register read command sent by the host, wherein the TPM register read command carries indication information indicating an amount of to-be-read data; and
send, to the host, response data that is of the amount of the to-be-read data and that is stored in the transmit buffer; and
the TPM logic module is further configured to: determine that data stored in the transmit buffer is less than a second data amount threshold, and send a first interrupt signal to the processor; and
in response to the first interrupt signal, the processor is further configured to: read, from remaining data of the response data stored in the TPM register, data that is not greater than the remaining storage space of the transmit buffer, and dump the data into the transmit buffer.

10. The TPM according to any one of claims 7 to 9, wherein before the TPM logic module receives the TPM register write command sent by the host, the TPM logic module is further configured to configure a value of a burst count burst count field in a status register as a size of a remaining storage space of the receive buffer.

11. The TPM according to any one of claims 7 to 10, wherein after the processor executes the task indicated by the TPM command data, the TPM logic module is further configured to configure the value of the burst count field in the status register as a data amount of the data stored in the transmit buffer.

12. The TPM according to any one of claims 7 to 11, wherein the TPM logic module is further configured to: determine that the data stored in the receive buffer reaches the first data amount threshold, and send a second interrupt message to the processor; and
in response to the second interrupt message, the processor is configured to dump, into the TPM register, the data stored in the receive buffer.

13. A board, wherein the board comprises a central processing unit CPU and a trusted platform module TPM, the CPU is configured to send a register write command to the TPM, and the TPM is configured to perform the communication method of the trusted platform module TPM according to any one of claims 1 to 6.

14. A device, wherein the device comprises a central processing unit CPU and a trusted platform module TPM, the CPU is configured to send a TPM register write command to the TPM, and the TPM is configured to perform the communication method of the trusted platform module TPM according to any one of claims 1 to 6.
